(19) Europäisches Patentamt
European Patent Office
Office européen des brevets

(11) Veröffentlichungsnummer : **0 129 775**
**B1**

(12) # EUROPÄISCHE PATENTSCHRIFT

(45) Veröffentlichungstag der Patentschrift :
21.10.87

(51) Int. Cl.⁴ : **B 01 D 53/34**, **F 28 C   1/00**

(21) Anmeldenummer : 84106728.3

(22) Anmeldetag : 13.06.84

(54) Anlage zum Ableiten von Rauchgasen aus einer Rauchgasentschwefelungsanlage in die Atmosphäre.

(30) Priorität : 18.06.83 DE 3321961

(43) Veröffentlichungstag der Anmeldung :
02.01.85 Patentblatt 85/01

(45) Bekanntmachung des Hinweises auf die Patenterteilung : 21.10.87 Patentblatt 87/43

(84) Benannte Vertragsstaaten :
AT BE CH DE FR GB IT LI LU NL SE

(56) Entgegenhaltungen :
DE-A- 2 738 501
DE-A- 2 752 288
DE-C-   347 141
FR-A- 2 290 942
GB-A-   528 938
US-A- 4 121 541

(73) Patentinhaber : Hölter, Heinz, Dipl.-Ing.
Beisenstrasse 39-41
D-4390 Gladbeck (DE)

(72) Erfinder : Hölter, Heinz, Dipl.-Ing.
Beisenstrasse 39 - 41
D-4390 Gladbeck (DE)
Erfinder : Igelbüscher, Heinrich, Dipl.-Ing.
Marcq-en-Baroeul-Strasse 60
D-4390 Gladbeck (DE)
Erfinder : Gresch, Heinrich, Ing.-grad.
Franz-Lehàr-Strasse 25
D-4600 Dortmund-Wickede (DE)
Erfinder : Dewert, Heribert, Dipl.-Ing.
Bahnhofstrasse 23
D-4390 Gladbeck (DE)
Erfinder : Hein, Klaus R.G., Dr.-Ing.
Heppendorfer Strasse 41
D-5010 Bergheim-Ahe (DE)
Erfinder : Gebhard, Georg, Dr.-Ing.
Oberwehnrath
D-5226 Reichshof (DE)

(74) Vertreter : Spalthoff, Adolf, Dipl.-Ing.
Pelmanstrasse 31 P.O. Box 34 02 20
D-4300 Essen 1 (DE)

EP 0 129 775 B1

## Beschreibung

Die Erfindung betrifft eine Anlage zum Ableiten von Rauchgasen aus einer Rauchgasentschwefelungsanlage in die Atmosphäre, wobei die vorgereinigten Rauchgase in den Naßbereich eines Kühlturms eingeleitet werden.

Es ist bereits ein Verfahren vorgeschlagen worden, in dem vorzugsweise hinter Altkraftwerken mit niedrigem Kühlturm das gewaschene Rauchgas aus einer Rauchgasentschwefelungs-anlage über einen großflächigen Verteiler in Bodennähe des Kühlturms eingeleitet wird.

Nach einem älteren Vorschlag mündet die Gasleitung aus der Rauchgasentschwefelungsanlage unterhalb einer haubenförmigen Bewehrung, wobei diese haubenförmige Bewehrung unterhalb der Tropfenabscheideanordnung, d. h. der Schwadenabscheidung in einem Kühlturm angeordnet ist. Der Tropfenausriß unterhalb der Haube und durch zusätzliche Tropfenscheider oberhalb der Haube soll auf diese Weise weitgehend vermieden werden.

Erfindungsgemäß wird dieser Grundgedanke weiterverfolgt, um zu vermeiden, daß Tropfendurchrisse, die ja nicht gänzlich zu vermeiden sind, in das Kühlwasser gelangen und dort eine zusätzliche chemische Behandlung des Kühlwassers und/oder ein gesteigertes Abschlämmen erforderlich machen bzw. das Kühlwasser sehr stark negativ beeinflussen.

Gelöst wird diese Aufgabe durch eine Anlage der eingangs genannten Gattung, die dadurch gekennzeichnet ist, daß das Einleitungsrohr sich in ein Überleitrohr innerhalb des Kühlturmes erstreckt, welches bis über dessen Schwadenfänger reicht, wobei im Bereich der Schwadenfänger, vorzugsweise oberhalb derselben, Tropfenabscheider im Überleitrohr angeordnet sind.

Weitere Einzelheiten der Erfindung ergeben sich aus der abhängigen Ansprüchen.

Erfindungsgemäß wird daher vorgeschlagen, die eingeleiteten Gase einer Rauchgasentschwefelungsanlage oberhalb der Schwadenfänger des Kühlturms austreten zu lassen, wobei in bevorzugter Weise in dem Überleitrohr eine zusätzliche Waschstrecke angeordnet ist, die einmal ein Nachwaschen ermöglicht und zum anderen im Bereich der Schwadenfänger, vorzugsweise oberhalb derselben, Tropfenabscheider angesetzt sind, die die Garantie bieten, daß der sich durch Abkühlung und somit Taupunktsunterschreitung in dem Überleitrohr bildende Schwaden bzw. feinst durchgerissene Tropfen nicht in dem Überleitrohr abgeschieden und nicht mehr in den Kühlwasserkreislauf gelangen und zusätzlich durch die Frischwasserspülung in dem Überleitrohr in ihrer Konzentration die $SO_2$-Belastung derart stark schwächen, daß Feinstnebel oberhalb der Schwadenfänger mit dem Verdünnungsfaktor, z. B. 1 : 30, soweit verdünnt sind, daß von einer Konzentration nicht mehr gesprochen werden kann.

Erfindungsgemäß wird weiterhin zur Waschung in diesem Überleitrohr Frischwasser benutzt, das dem Prozeß der Rauchgaswaschung als notwendiges Prozeßwasser anschließend zugeführt wird.

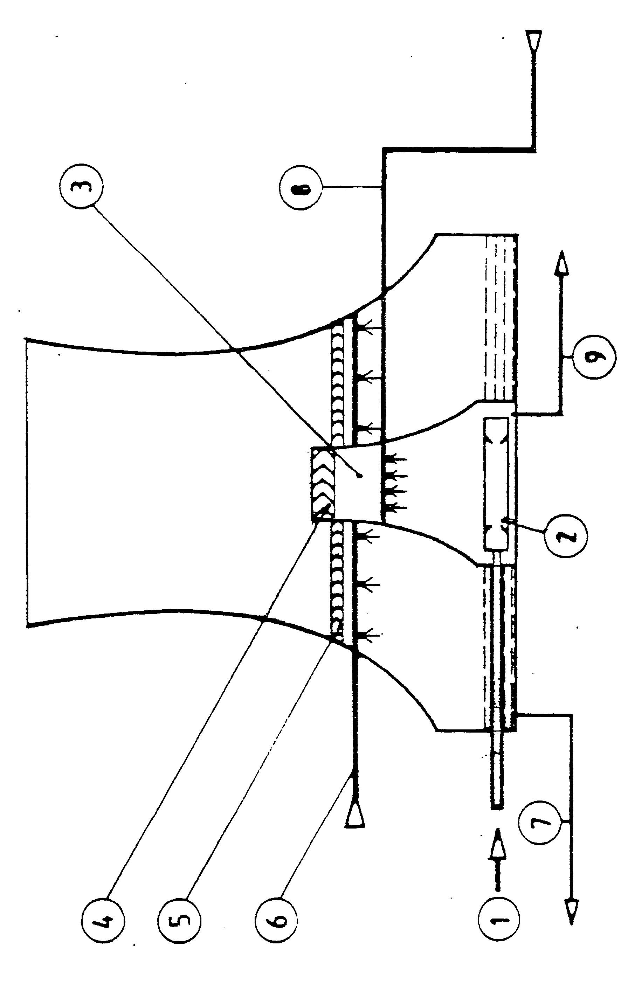

In der Zeichnung ist

mit 1 die Rauchgasleitung im unteren Bereich des Kühlturmes bezeichnet,

mit 2 der Verteilungsring für die Rauchgase,

mit 3 das Überleitrohr, das gleichzeitig als Wäscher ausgebildet ist,

mit 4 der Tropfenfänger des Überleitrohr-Wäschers,

mit 5 die Tropfenfänger bzw. Schwadenfänger des Kühlturmes zur Trennung des Naß- und Trockenteils eines Naßkühlturmes,

mit 6 die Düsen des Naßkühlturmes,

mit 7 das Abschlämmwasser aus der Kühlturmtasse,

mit 8 das zugeführte Frischwasser in dem Überleitrohr und

mit 9 die Rückführung des Frischwassers im Überleitrohr nach dem Waschprozeß in die Rauchgasentschwefelungsanlage.

## Patentansprüche

1. Anlage zum Ableiten von Rauchgasen aus einer Rauchgasentschwefelungsanlage in die Atmosphäre, wobei die vorgereinigten Rauchgase in den Naßbereich eines Kühlturms eingeleitet werden, dadurch gekennzeichnet, daß das Einleitungsrohr (1) sich in ein Überleitrohr (3) innerhalb des Kühlturmes erstreckt, welches bis über dessen Schwadenfänger (5) reicht, wobei im Bereich der Schwadenfänger (5), vorzugsweise oberhalb derselben, Tropfenabscheider (4) im Überleitrohr (3) angeordnet sind.

2. Anlage nach Anspruch 1, dadurch gekennzeichnet, daß das Überleitrohr (3) als zusätzlicher Rauchgaswäscher ausgebildet ist.

3. Anlage nach Anspruch 1 oder 2, dadurch gekennzeichnet, daß der Bodenbereich des Überleitrohres (3) über eine Rückführleitung (9) mit dem Hauptwäscher der Rauchgasentschwefelungsanlage verbunden ist.

## Claims

1. Plant for dissipating flue gases from a flue gas desulphurating plant into the atmosphere, whereby the precleaned flue gases are fed into the wet area of a cooling tower, characterised in that the feed pipe (1) extends into a transfer pipe (3) inside the cooling tower, which extends over gas cloud traps (5) of the tower, whereby mist collectors (4) are arranged in the transfer pipe (3) in the area of the gas cloud traps (5) and for preference above them.

2. Plant according to claim 1, characterised in that the transfer pipe (3) is constructed as an additional flue gas washer.

3. Plant according to claim 1 or 2, characterised in that the base area of the transfer pipe (3) is connected to the main washer of the flue gas desulphurating plant via a return line (9).

**Revendications**

1. Dispositif pour dériver à l'atmosphère les gaz de fumée provenant d'une installation de désulfuration de gaz de fumée, les gaz de fumée préépurés étant envoyés dans la zone humide d'une tour de refroidissement, caractérisé par le fait que le tube d'entrée (1) à l'intérieur de la tour de refroidissement se prolonge en un tube d'écoulement (3) qui s'étend jusqu'au-dessus des capteurs de buées (5) de celle-ci, des séparateurs de gouttes (4) étant disposés dans le tube d'écoulement (3) dans la zone des capteurs de buées (5), de préférence au-dessus de ceux-ci.

2. Dispositif selon la revendication 1, caractérisé par le fait que le tube d'écoulement (3) est réalisé sous la forme d'un laveur de gaz de fumée supplémentaire.

3. Dispositif selon la revendication 1 ou 2, caractérisé par le fait que la zone du fond du tube d'écoulement (3) est raccordée par une conduite de retour (9) au laveur principal de l'installation de désulfuration des gaz de fumée.